# EUROPEAN PATENT APPLICATION

(11) **EP 2 009 959 A2**
(43) Date of publication of application: **31.12.2008**
(21) Application number: 08158884.0
(22) Date of filing: 24.06.2008
(51) Int. Cl.: H05B 6/80

(54) **Microwave oven and cleaning control method thereof**

(30) Priority: 25.06.2007 KR 20070062033
(71) Applicant: Daewoo Electronics Corporation, Seoul (KR)
(72) Inventor: Park, Yu Soo, Incheon-si (KR)
(74) Representative: Michalski, Stefan

(57) **Abstract**

A microwave oven and a cleaning control method thereof are disclosed therein. The microwave oven includes a tray rotatably disposed inside the cooking chamber to rotate the cooking target placed thereon and a lower heater disposed under the tray to heat water contained in the tray. The tray is configured to contain water for generating steam.

## Description

### BACKGROUND OF THE INVENTION

### 1. Field of the Invention

The present invention relates to a microwave oven and cleaning control method thereof, and more particularly to a microwave oven and cleaning control method thereof that has a steam generating function and can completely remove water in a cooking chamber after cleaning by a soaking function with steam.

### 2. Description of the Related Art

Various types of devices have been proposed for heating foods. As an example of the most primitive form of heating device, there is a container that directly contacts a heating source. In this case, items to be cooked are placed in the container and then heated for cooking.

Further, many cooking devices directly or indirectly using electricity have been developed. For instance, there is a microwave oven employing microwaves as a heating source. The microwave oven uses electricity to generate and radiate microwaves to an item to be cooked, oscillating molecules therein. Oscillation of the molecules in the item causes heating thereof.

In general, a microwave oven is a kitchen device that irradiates an item to be cooked with high-frequency waves emitted from a magnetron, and heats both an interior and exterior of the item. The microwave oven is widely used since it has advantages of sharply reducing a cooking duration due to high thermal efficiency thereof; reducing nutritive loss while cooking, thawing, and warming food; and cooking the food directly within a storage container.

Additionally, a single-function microwave oven has been recently proposed that cooks food with 2450 MHz microwaves emitted by the magnetron. Further, examples of a multi-function microwave oven employing other functions in addition to the microwave-based heating function include a grill-type microwave oven having a grill function with grill heaters provided at upper and lower sides of a cooking chamber, a convection-type microwave oven having an oven function with a convection fan for convection of hot air, etc.

However, when cooking food with such a conventional microwave oven, dispersal of food may occur, thereby polluting the cooking chamber.

Furthermore, in the case where the scattered food contains fats or is dried inside the cooking chamber, not only does the cooking chamber become dirty but also it is difficult to remove such food remnants.

### SUMMARY OF THE INVENTION

The present invention is conceived to solve the problems of the conventional techniques as described above, and an aspect of the present invention is to provide a microwave oven and cleaning control method thereof that has a steam generating function and can completely remove water in a cooking chamber after cleaning by a soaking function with steam.

In accordance with one aspect of the present invention, a microwave oven heats a cooking target by operating a magnetron to irradiate a high-frequency wave to an interior of a cooking chamber, and includes: a tray rotatably disposed inside the cooking chamber to rotate the cooking target placed thereon, the tray being configured to contain water for generating steam; and a lower heater disposed under the tray to heat water contained in the tray.

The tray may have graduations marked thereon to check a level of water contained in the tray.

In accordance with another aspect of the present invention, a cleaning control method of a microwave oven having a lower heater for heating water contained in a tray is provided, including: determining whether a cleaning key is selected; operating a magnetron and the lower heater for a first preset duration if the cleaning key is selected; operating the lower heater for a second preset duration in a state that the magnetron and a cooling fan are stopped after applying power for the first preset duration; indicating completion of preparation for cleaning; determining whether the cleaning key is input again with the completion of preparation for cleaning indicated; and operating the cooling fan and the lower heater for a third preset duration if the cleaning key is input again.

The indicating of completion of preparation for cleaning may include maintaining the lower heater for a fourth preset duration after operating the lower heater for the second preset duration, and indicating completion of preparation for cleaning.

The first preset duration may be 2 - 3 minutes.

The second preset duration may be 3 - 4 minutes.

The third preset duration may be 3 - 4 minutes.

The fourth preset duration may be 1 ~ 2 minutes.

The lower heater may be intermittently operated while the lower heater is operated for the third preset duration.

The cleaning control method may further include interrupting power to the magnetron or the lower heater if a temperature of the cooking chamber increases above a predetermined temperature when operating the magnetron or the lower heater.

The indicating of completion of preparation for cleaning may include turning on an interior lamp.

The cleaning control method may further include indicating completion of cleaning if there is no input of the cleaning key again for a predetermined duration or more in the determining whether the cleaning key is input again.

The cleaning control method may further include indicating completion of cleaning after operating the cooling fan and the lower heater for the third preset duration.

With this configuration, when the cleaning key is input, water contained in the tray is quickly heated by high-frequency waves emitted by magnetron and the lower heater to generate steam for removal of cooking residues adhered to the inner wall of the cooking chamber, thereby not only facilitating a cleaning operation but also completely removing water in the cooking chamber after the cleaning operation.

### BRIEF DESCRIPTION OF THE DRAWINGS

The above and other features and advantages of the present invention will become apparent from the following description of preferred embodiments given in conjunction with the accompanying drawings, in which:
Fig. 1 is a sectional view of a microwave oven according to one embodiment of the present invention; and
Fig. 2 is a flowchart illustrating a cleaning control method of the microwave oven according to one embodiment of the present invention.

### DETAILED DESCRIPTION OF THE INVENTION

Exemplary embodiments of the present invention will be described with reference to the accompanying drawings in which like numerals and symbols refer to like elements throughout. Further, these embodiments do not limit the scope of the present invention and are given by way of illustration only. Accordingly, it should be appreciated that various modifications and changes can be made by a person having ordinary knowledge in the art without departing from the spirit and scope of the present invention.

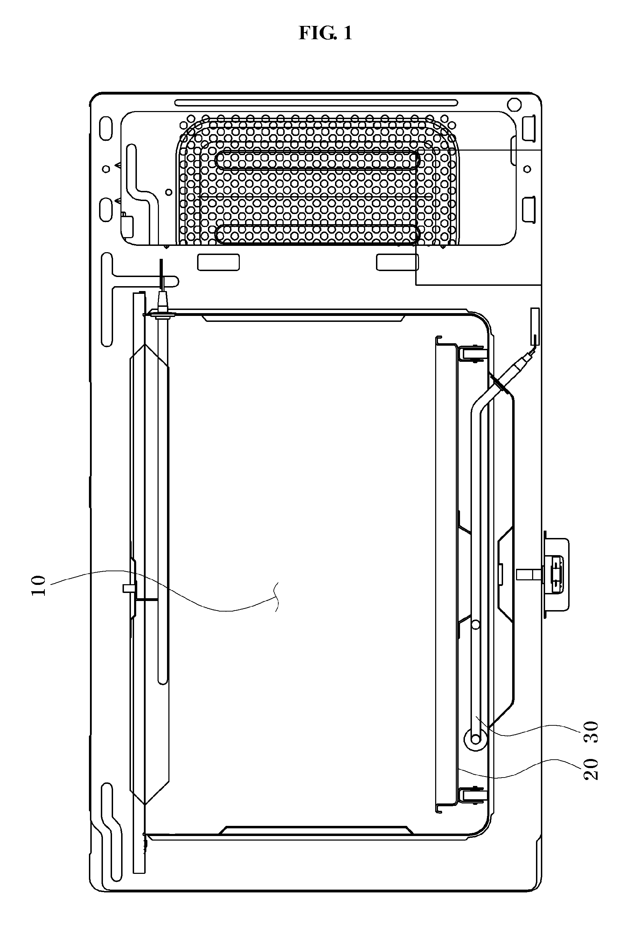

Fig. 1 is a sectional view of a microwave oven according to one embodiment of the present invention.

Herein, main components of the microwave oven according to this embodiment are shown without general components of the microwave oven.

The microwave oven includes a tray 20 rotatably disposed on a lower side of a cooking chamber 10 to rotate a cooking target located thereon and having a raised outer periphery so as to contain water in the tray; and a lower heater 30 located under the tray 20 to heat water contained in the tray 20.

The tray 20 has graduations marked thereon to verify the amount of water in the tray 20, so that the amount of water can be sufficiently adjusted when generating steam for cleaning.

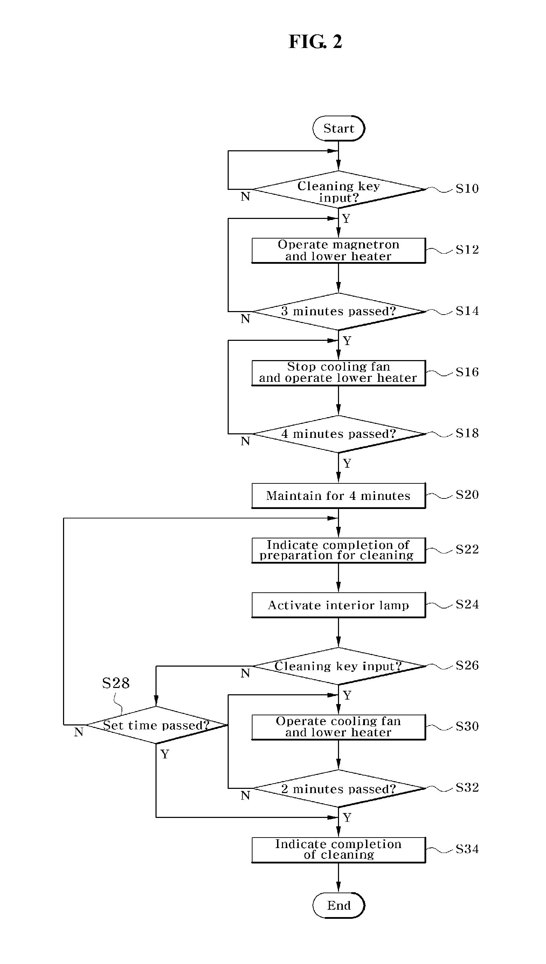

With the microwave oven wherein the tray 20 capable of containing water is heated to generate steam, a cleaning control method will be described below with reference to Fig. 2.

First, when the microwave oven is operated, it is determined whether a cleaning key is selected, in S10. At this time, if another key besides the cleaning key is selected, an operation corresponding to the selected key will be performed.

When the cleaning key is selected, a magnetron (not shown) and the lower heater 30 are operated for about 2 ~ 3 minutes so as to heat water contained in the tray 20, thereby generating steam in S12 and S 14.

In such an initial stage, both the magnetron and the lower heater 30 are operated to quickly heat the tray 20 and generate steam.

After heating for about 2 ~ 3 minutes, with the magnetron and a cooling fan (not shown) stopped, only the lower heater 30 is operated for about 3 ~ 4 minutes to continuously generate steam in S16, and, the cooling fan is stopped to prevent air from flowing into the cooking chamber 10 in S18.

In this manner, when the magnetron or the lower heater 30 are operated, a small amount of water contained in the tray 20 is heated, and, if the temperature of the chamber rises above a predetermined temperature, power supply is interrupted to stop the magnetron or the lower heater 30.

After water contained in the tray 20 is heated to generate steam, this state is maintained for 3 - 4 minutes so that food scraps dried on an inner wall of the cooking chamber 10 can be sufficiently soaked in the generated steam, in S20. Then, completion of preparation for cleaning is indicated in S22, thereby allowing the cleaning operation to be started.

In S24, while indicating the completion of preparation for cleaning, an interior lamp (not shown) may be turned on to illuminate the interior of the cooking chamber 10, thereby facilitating the cleaning operation.

After the cleaning operation, whether the cleaning key is input again to remove water remaining inside the cooking chamber 10 is determined in S26.

If the cleaning key is input again after the cleaning operation, the cooling fan and the lower heater 30 are operated for 1 ~ 2 minutes so as to dry the interior of the cooking chamber 10 and maintain a cleaned state in S30 and S32.

At this time, the lower heater 30 is intermittently operated to generate heat without overheating to dry the interior of the cooking chamber 10. Then, completion of the cleaning operation is indicated, thereby terminating the cleaning operation, in S34.

Meanwhile, if the cleaning key is not input again after passage of a predetermined time, e.g., 20 minutes, after the cleaning operation, completion of the cleaning operation is indicated, thereby terminating the cleaning operation, in S28 and S34.

In this manner, according to the present invention, the tray is filled with water and is quickly heated by operating the magnetron and the lower heater, and then only the lower heater is operated to continuously generate steam. Thus, food scraps dried on the inner wall of the cooking chamber can be sufficiently soaked in the generated steam and then easily removed. Further, the cooling fan and the lower heater are operated to dry water remaining after cleaning, thereby completely removing water from the cooking chamber.

As described above, the present invention provides a microwave oven with a steam generating function and a cleaning control method thereof including not only a soaking function using steam generated therein to allow easy cleaning, but also a drying function to completely remove water from a cooking chamber after the cleaning, thereby maintaining cleanliness of the microwave oven.

Although the present invention has been described with reference to the embodiments and the accompanying drawings, it is not limited to the embodiments and the drawings. It should be understood that various modifications and changes can be made by those skilled in the art without departing from the spirit and scope of the present invention defined by the accompanying claims.

## Claims

1. A microwave oven heating a cooking target by operating a magnetron to emit high-frequency waves into a cooking chamber, the microwave oven comprising:
a tray rotatably disposed inside the cooking chamber to rotate the cooking target placed thereon, the tray being configured to contain water for generating steam; and
a lower heater disposed under the tray to heat water contained in the tray.

2. The microwave oven according to claim 1, wherein the tray has graduations marked thereon to check a level of water contained in the tray.

3. A cleaning control method of a microwave oven having a lower heater for heating water contained in a tray, the method comprising:
determining whether a cleaning key is selected;
operating a magnetron and the lower heater for a first preset duration if the cleaning key is selected;
operating the lower heater for a second preset duration in a state that the magnetron and a cooling fan are stopped after applying power for the first preset duration;
indicating completion of preparation for cleaning;
determining whether the cleaning key is input again with the completion of preparation for cleaning indicated; and
operating the cooling fan and the lower heater for a third preset duration if the cleaning key is input again.

4. The cleaning control method according to claim 3, wherein the indicating of completion of preparation for cleaning comprises maintaining the lower heater for a fourth preset duration after operating the lower heater for the second preset duration, and indicating completion of preparation for cleaning.

5. The cleaning control method according to claim 3, wherein the first preset duration is 2 ~ 3 minutes.

6. The cleaning control method according to claim 3, wherein the second preset duration is 3 - 4 minutes.

7. The cleaning control method according to claim 3, wherein the third preset duration is 3 ~ 4 minutes.

8. The cleaning control method according to claim 4, wherein the fourth preset duration is 1 ~ 2 minutes.

9. The cleaning control method according to claim 3, wherein the lower heater is intermittently operated while the lower heater is operated for the third preset duration.

10. The cleaning control method according to claim 3, further comprising:
interrupting power to the magnetron or the lower heater if a temperature of the cooking chamber increases above a predetermined temperature when operating the magnetron or the lower heater.

11. The cleaning control method according to claim 3, wherein the indicating of completion of preparation for cleaning includes turning on an interior lamp.

12. The cleaning control method according to claim 3, further comprising:
indicating completion of cleaning if there is no input of the cleaning key again for a predetermined duration or more in the determining whether the cleaning key is input again.

13. The cleaning control method according to claim 3, further comprising:
indicating completion of cleaning after operating the cooling fan and the lower heater for the third preset duration.
